# FASCICULE DE BREVET EUROPEEN

(11) **EP 4 347 358 B1**
(45) Date de publication et mention de la délivrance du brevet: **07.05.2025**
(21) Numéro de dépôt: 22717242.6
(22) Date de dépôt: 30.03.2022
(51) Int. Cl.: B62D 21/08, B62D 21/15, B60K 15/03, B60K 15/07, F16F 7/12

(54) **VEHICULE MUNI D'UN DISPOSITIF D'AMORTISSEMENT DE CHOC POUR UN RESERVOIR DE GAZ**
FAHRZEUG MIT EINER STOSSDÄMPFUNGSVORRICHTUNG FÜR EINEN GASTANK
VEHICLE PROVIDED WITH A SHOCK-ABSORBING DEVICE FOR A GAS TANK

(30) Priorité: 28.05.2021 FR 2105560
(43) Date de publication de la demande: 10.04.2024
(73) Titulaire: Stellantis Auto SAS, 78300 Poissy (FR)
(72) Inventeur: DIMITROVA, Zlatina, 78000 VERSAILLES (FR); PERU, Marc, 92290 CHATENAY MALABRY (FR)
(74) Mandataire: PSIP
(86) Numéro de dépôt international: PCT/FR2022/050596
(87) Numéro de publication internationale: WO 2022/248783

(56) Documents cités:
- EP-A1- 0 687 587
- CN-A- 110 525 204
- CN-U- 212 604 496
- FR-A1- 3 031 491
- US-A1- 2006 032 532

## Description

L'invention concerne de manière générale le domaine des véhicules ayant comme carburant un gaz tel que l'hydrogène, et notamment les véhicules électriques à pile à combustible. Plus particulièrement, l'invention se rapporte à un véhicule, notamment un véhicule automobile, muni d'un dispositif d'amortissement de choc pour un réservoir de gaz, tel qu'un réservoir d'hydrogène.

Les réservoirs d'hydrogène embarqués dans les véhicules sont le plus souvent des bouteilles de forme cylindrique. Dans une bouteille, l'hydrogène est stocké sous forme gazeuse à haute pression, typiquement à une pression de 700 à 800 bars. Cette technologie permet de stocker suffisamment d'hydrogène pour octroyer une autonomie de 500km à 600km à une voiture automobile équipée d'une pile à combustible.

De manière générale, l'utilisation de l'hydrogène comme carburant dans un véhicule pose un problème de sécurité lié au risque de fuites et d'explosion qui peuvent survenir en cas de chocs ou d'incendies. Ainsi, les réservoirs d'hydrogène embarqués dans les véhicules font l'objet de normes qui traitent notamment de leur durée de vie, de l'étanchéité, de la protection contre les chocs et d'autres aspects liés à la sécurité.

La protection contre les chocs, et notamment les chocs latéraux, demande une attention particulière compte-tenu des conséquences possibles. L'implantation des réservoirs d'hydrogène dans une zone centrale du véhicule favorise la présence de zones de déformation capables d'absorber une partie de l'énergie du choc. Le montage des réservoirs d'hydrogène sous la caisse du véhicule est une solution intéressante permettant de conserver des volumes de confort dans le coffre à bagages et l'habitacle. Le montage sous caisse offre une plus grande disponibilité de place qui facilite une meilleure optimisation de l'implantation par rapport aux différentes contraintes. De plus, en cas de surpression dans les réservoirs d'hydrogène, l'implantation sous la caisse facilite une échappée et une diffusion rapide du gaz dans l'air libre, réduisant ainsi le risque de déflagration.

Par ailleurs, pour satisfaire aux besoins de standardisation dans l'industrie automobile, il est souhaitable que la solution de montage des réservoirs de gaz puisse s'intégrer aisément dans une plateforme de véhicule existante. Il peut ainsi être avantageux de réutiliser un bac de batterie de stockage d'énergie électrique pour la réception des réservoirs de gaz.

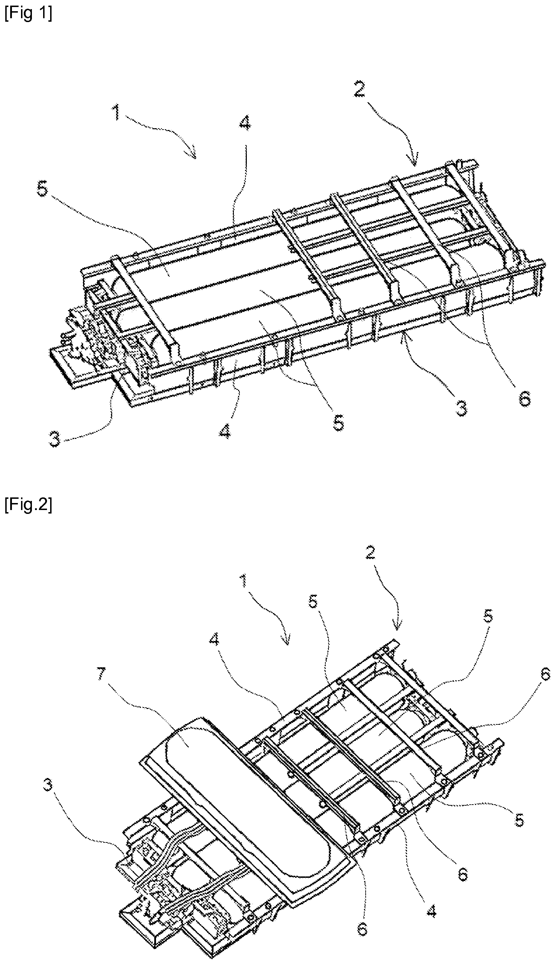

Comme cela est illustré sur la figure 1, un tel bac de batterie 1 comporte un cadre 2 formé par une pluralité de longerons 3 et des flasques latéraux 4. Les réservoirs de gaz 5 disposés à l'intérieur du bac 1 s'étendent suivant une direction longitudinale du véhicule. Le bac 1 comporte également des traverses de renfort 6 qui permettent de répartir un effort de choc latéral.

Toutefois, suivant certaines configurations de véhicule illustrées en figure 2, on prévoit une batterie 7 d'énergie électrique de prolongation d'autonomie, dite batterie "Range Extender" en anglais. Les contraintes d'implantation d'une telle batterie 7 limitent le nombre de traverses 6 dans une zone du bac 1 en regard de laquelle est disposée la batterie 7.

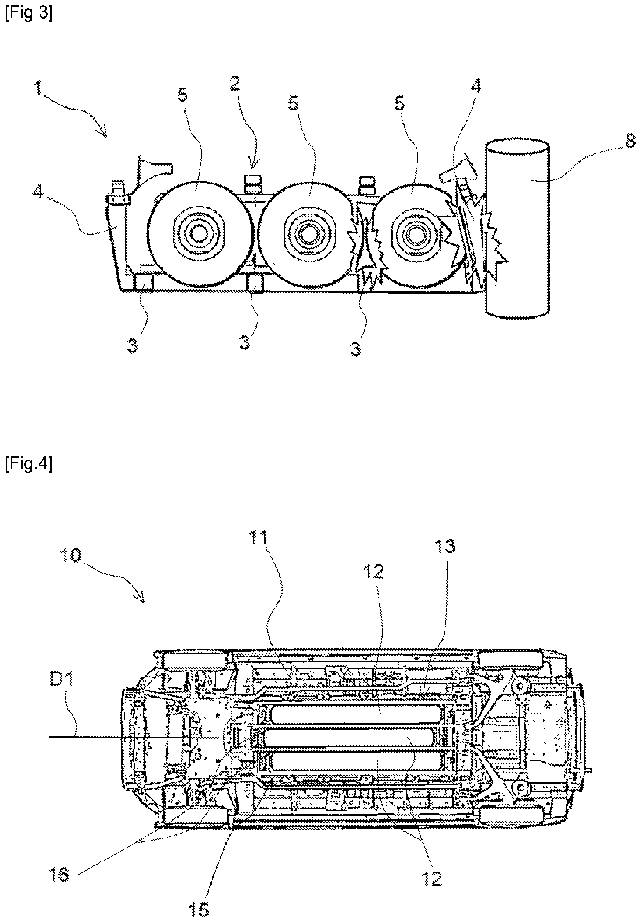

Comme on peut le voir sur la figure 3, en cas de choc latéral se produisant contre un poteau 8 en dehors de la zone des traverses 6, les flasques latéraux 4 vont fléchir. Cela engendre un risque d'endommagement des réservoirs 5 et des composants d'un circuit de gaz haute pression, tels que des tuyaux et des détendeurs.

En outre l'état de la technique est connu du document CN212604496U.

L'invention vise à remédier efficacement aux inconvénients précités en proposant un véhicule, notamment un véhicule automobile, comportant:
- des réservoirs de gaz, tels que des réservoirs à hydrogène, et
- un bac de réception des réservoirs de gaz comportant un cadre formé par des longerons et des flasques latéraux,
- ledit véhicule comportant en outre un dispositif d'amortissement de choc disposé au moins entre un flasque latéral du bac de réception des réservoirs de gaz et au moins une portion d'une face latérale d'un réservoir de gaz et/ou entre au moins deux portions de deux faces latérales de deux réservoirs de gaz adjacents, de façon à pouvoir absorber par déformation au moins en partie un choc subi par le véhicule.

L'invention permet ainsi, grâce à l'intégration du dispositif d'amortissement de choc, d'éviter un risque d'endommagement des réservoirs de gaz et des composants d'un circuit de gaz haute pression quelle que soit la zone du bac dans laquelle se produit un choc latéral. Il est ainsi possible de réutiliser un bac de batterie existant en s'affranchissant de tout risque sécuritaire.

Selon une réalisation de l'invention, le bac de réception des réservoirs de gaz comportant des traverses de renfort, le dispositif d'amortissement est situé dans une zone du bac de réception des réservoirs de gaz dépourvue de traverse de renfort.

Selon une réalisation de l'invention, le dispositif d'amortissement de choc comporte au moins un élément latéral rapporté disposé entre un flasque latéral du bac et au moins une portion d'une face latérale d'un réservoir de gaz et/ou au moins un élément intermédiaire rapporté disposé entre au moins deux portions de deux faces latérales de deux réservoirs de gaz adjacents, l'élément latéral rapporté et l'élément intermédiaire rapporté étant des éléments distincts l'un de l'autre.

Selon une réalisation de l'invention, l'élément latéral rapporté présente une face interne en forme de portion de cylindre coopérant avec une portion d'une face latérale cylindrique d'un réservoir et une face en appui contre au moins une portion d'un flasque latéral du cadre du bac de réception des réservoirs de gaz.

Selon une réalisation de l'invention, l'élément intermédiaire rapporté présente deux faces internes en forme de portion de cylindre coopérant chacune avec une portion d'une face latérale d'un réservoir de gaz correspondant.

Selon une réalisation de l'invention, l'élément latéral rapporté et/ou l'élément intermédiaire rapporté comporte(nt) au moins un orifice de passage de canalisation.

Selon une réalisation de l'invention, le dispositif d'amortissement de choc est configuré de façon à convertir un effort concentré du choc latéral en un champ de pression uniforme appliqué par le dispositif d'amortissement de choc sur une face latérale d'un réservoir de gaz.

Selon une réalisation de l'invention, le dispositif d'amortissement de choc comporte un corps creux dans lequel sont ménagées des nervures formant une pluralité de cellules creuses.

Selon une réalisation de l'invention, le dispositif d'amortissement de choc comporte un corps creux dans lequel sont disposées une pluralité de sphères ayant une structure lattice.

Selon une réalisation de l'invention, le dispositif d'amortissement de choc comporte un corps creux dans lequel sont disposés une pluralité de cylindres ayant une structure lattice.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1, déjà décrite, est une vue d'un bac d'un véhicule automobile contenant des réservoirs de gaz ;
[Fig. 2] La figure 2, déjà décrite, illustre l'intégration d'une batterie d'énergie électrique à proximité du bac de réception des réservoirs de gaz;
[Fig. 3] La figure 3, déjà décrite, est une vue de côté illustrant la déformation d'un flasque du bac de réception des réservoirs de gaz en cas de choc latéral dans une zone dépourvue de traverse de renfort;
[Fig. 4] La figure 4 est une vue de dessous d'un véhicule automobile selon l'invention intégrant un bac de réception de réservoirs de gaz selon l'invention;
[Fig. 5] La figure 5 est une vue en perspective d'un bac de réception de réservoirs de gaz intégrant un dispositif d'amortissement de choc selon l'invention;
[Fig. 6] La figure 6 est une vue de face d'un bac de réception de réservoirs de gaz intégrant un dispositif d'amortissement de choc selon l'invention;
[Fig. 7] La figure 7 est une vue de face d'un élément latéral d'un dispositif d'amortissement de choc intégré dans un bac de réception de réservoirs de gaz selon l'invention;
[Fig. 8] La figure 8 est une vue en perspective de l'élément latéral de la figure 7;
[Fig. 9] La figure 9 est une vue de côté d'un élément latéral d'un dispositif d'amortissement de choc selon l'invention illustrant une répartition d'un effort engendré par un choc sur une face interne coopérant avec un réservoir de gaz;
[Fig. 10] La figure 10 est une vue de face d'un élément intermédiaire d'un dispositif d'amortissement de choc selon l'invention intégré dans un bac de réception de réservoirs de gaz;
[Fig. 11] La figure 11 est une vue en perspective de l'élément intermédiaire de la figure 10;
[Fig. 12a] La figure 12a est une vue en perspective montrant par transparence des sphères à structure lattice disposées à l'intérieur d'un corps creux d'un élément latéral ou d'un élément intermédiaire selon l'invention;
[Fig. 12b] La figure 12b est une vue en perspective d'une sphère à structure lattice utilisée dans le mode de réalisation de la figure 12a;
[Fig. 13a] La figure 13a est une vue en perspective montrant par transparence des cylindres à structure lattice disposés à l'intérieur d'un corps creux d'un élément latéral ou d'un élément intermédiaire selon l'invention;
[Fig. 13b] La figure 13b est une vue en perspective d'un cylindre à structure lattice utilisé dans le mode de réalisation de la figure 13a.

Sur les figures 4 et suivantes, les éléments identiques, similaires, ou analogues conservent la même référence d'une figure à l'autre.

La figure 4 montre un véhicule automobile 10 comportant un plancher 11 ayant une direction D1 d'extension longitudinale. Des réservoirs de gaz 12, tels que des réservoirs d'hydrogène, sont disposés à l'intérieur d'un bac 13. Les réservoirs de gaz 12 s'étendent longitudinalement suivant la direction D1 d'extension longitudinale du plancher 11. Les réservoirs de gaz 12 prennent avantageusement la forme de bouteilles de forme cylindrique.

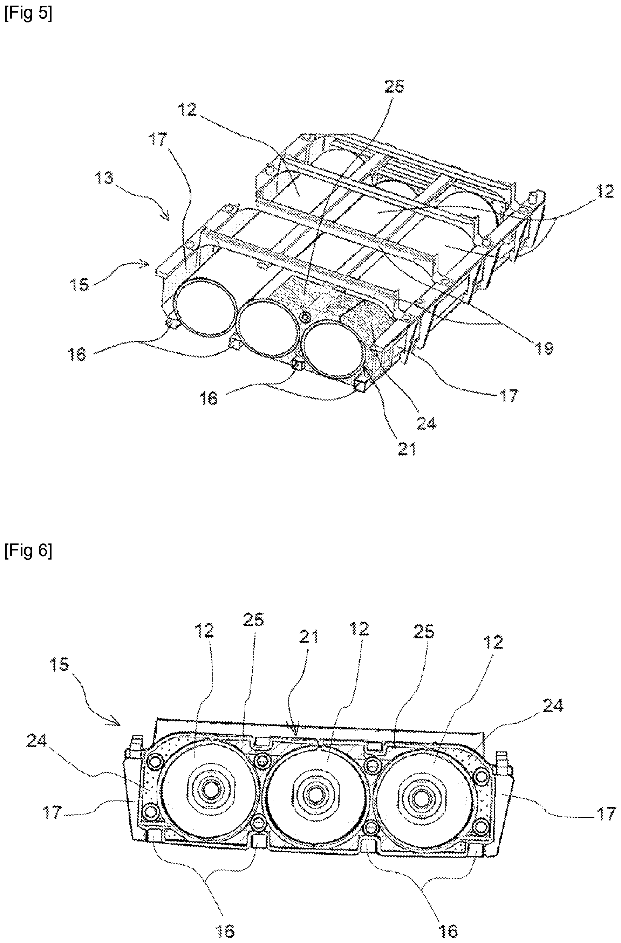

Comme on peut le voir sur la figure 5, le bac 13 de réception des réservoirs de gaz 12 comporte un cadre 15 formé par une pluralité de longerons 16 s'étendant longitudinalement suivant la direction D1 d'extension longitudinale du plancher 11 et des flasques latéraux 17 s'étendant suivant la direction D1 d'extension longitudinale du plancher 11. Le bac 13 comporte également des traverses de renfort 19 qui permettent de répartir un effort de choc latéral. Les traverses 19 de renfort s'étendent suivant une direction perpendiculaire à la direction D1 afin d'absorber des chocs latéraux.

En outre, un dispositif d'amortissement de choc 21 est disposé au moins entre un flasque latéral 17 du bac 13 et une face latérale d'un réservoir de gaz 12 et entre deux faces latérales de deux réservoirs de gaz 12 adjacents, de façon à pouvoir absorber par déformation au moins en partie un choc latéral subi par le véhicule 10. Le dispositif d'amortissement est avantageusement situé dans une zone du bac 13 de réception des réservoirs de gaz 12 dépourvue de traverse de renfort 19 pour permettre une intégration d'une batterie d'énergie électrique.

Le dispositif d'amortissement 21 comporte au moins un élément latéral rapporté 24 disposé au moins entre un flasque latéral 17 du bac 13 et une face latérale d'un réservoir de gaz 12 et au moins un élément intermédiaire rapporté 25 disposé entre deux faces latérales de deux réservoirs de gaz 12 adjacents.

L'élément latéral rapporté 24 et l'élément intermédiaire rapporté 25 sont des éléments distincts l'un de l'autre afin de faciliter leur montage à l'intérieur bac 13. Avantageusement, comme cela est illustré sur la figure 6, on prévoit deux éléments latéraux 24 et suffisamment d'éléments intermédiaires 25 pour qu'un élément intermédiaire soit disposé entre deux réservoirs de gaz 12 adjacents. Dans l'exemple représenté à trois réservoirs de gaz 12, on prévoit deux éléments intermédiaires 25. Plus généralement, pour N réservoirs, on prévoit deux éléments latéraux 24 à chaque extrémité de l'agencement de réservoirs de gaz et N-1 éléments intermédiaires 25, de sorte que tous les réservoirs de gaz 12 présentent au moins une portion de leur face latérale cylindrique protégée par le dispositif d'amortissement 21. En variante, le dispositif d'amortissement 21 pourra comporter uniquement un seul type d'élément à savoir uniquement un ou plusieurs éléments latéral rapporté 24 ou, un ou plusieurs éléments intermédiaires rapportés 25.

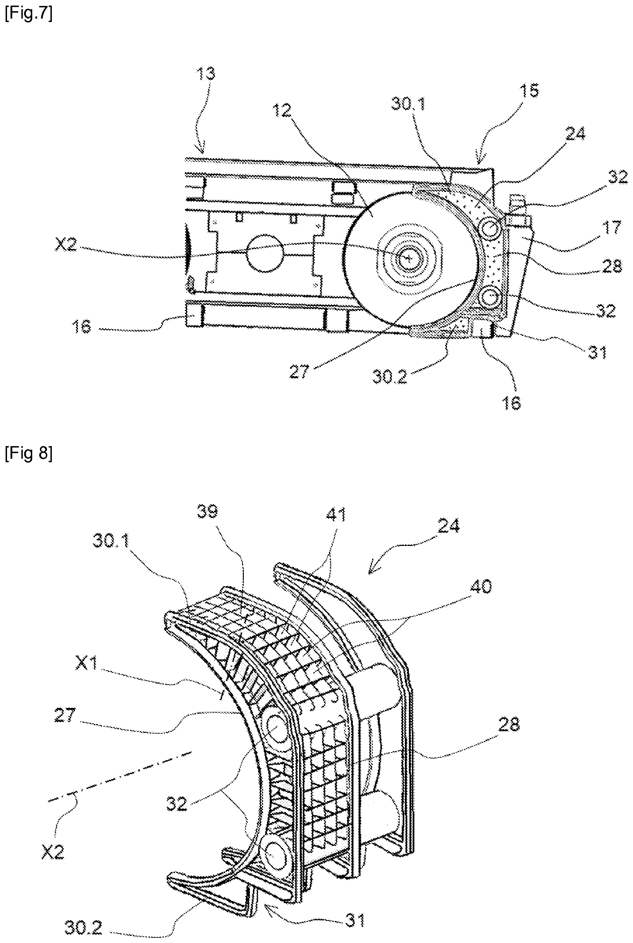

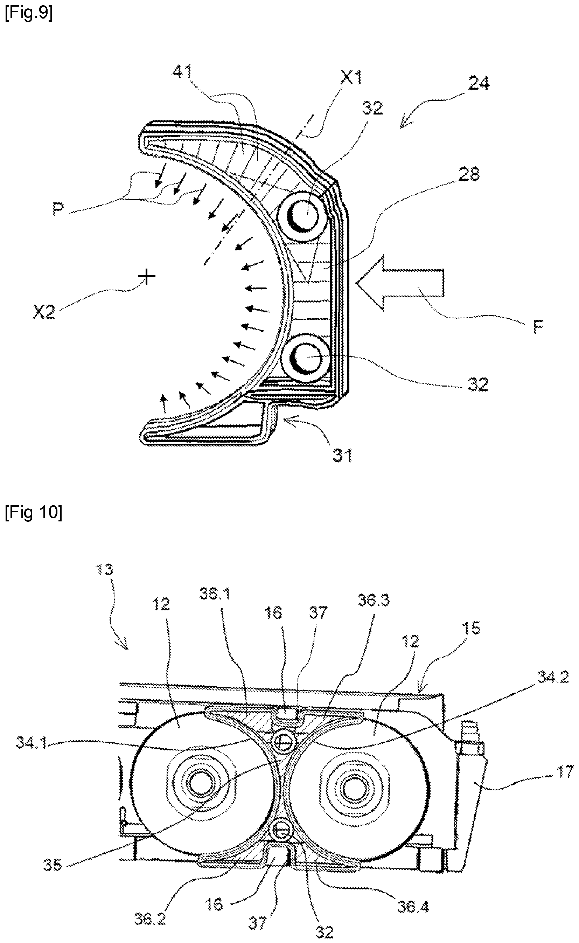

Plus précisément, comme on peut le voir sur la figure 7, l'élément latéral rapporté 24 présente une face interne 27 en forme de portion de cylindre coopérant avec une portion de la face latérale cylindrique d'un réservoir de gaz 12. L'élément latéral 24 comporte une paroi verticale 28 disposée entre une face du flasque latéral 17 et une portion de la face latérale d'un réservoir de gaz 12, ainsi que deux cornes 30.1, 30.2 issues de la paroi verticale 28, tel que cela est visible sur les figures 8 et 9. La paroi verticale 28 présente une face verticale du côté du flasque latéral 17 du bac 13 et une face opposée ayant une forme de portion de cylindre complémentaire du réservoir 12.

La face interne 27 coopérant avec la portion de la face latérale cylindrique du réservoir de gaz 12 est formée par la face interne de la paroi verticale 28 ayant une forme de portion de cylindre et les deux faces internes des deux cornes 30.1, 30.2.

Les cornes 30.1, 30.2 sont dirigées vers un réservoir de gaz 12. Une face interne des cornes 30.1, 30.2 en forme de portion de cylindre se situe dans le prolongement de la face de la paroi verticale 28 en forme de portion de cylindre. Les cornes 30.1, 30.2 présentent une épaisseur qui diminue lorsque l'on se déplace depuis la paroi verticale 28 vers l'extrémité libre des cornes 30.1, 30.2. L'élément latéral 24 comporte un évidement 31 pour permettre le passage d'un longeron 16 du bac 13 de réception des réservoirs de gaz 12. L'élément latéral 24 pourra également comporter au moins un orifice 32 de passage de canalisation de gaz, notamment deux orifices traversants 32 de passage de canalisation de gaz ou plus de deux orifices traversants 32.

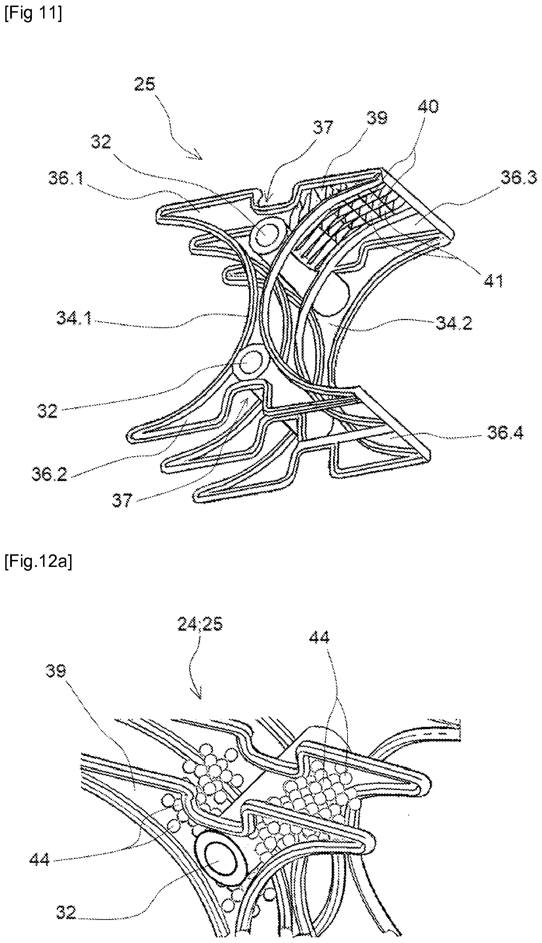

Par ailleurs, comme on peut le voir sur les figures 10 et 11, l'élément intermédiaire 25 comporte deux faces internes 34.1, 34.2 en forme de portion de cylindre coopérant chacune avec une portion d'une face latérale d'un réservoir de gaz 12 correspondant.

Plus précisément, l'élément intermédiaire 25 comporte une paroi verticale 35 disposée entre deux portions cylindriques de deux faces latérales de deux réservoirs de gaz 12, ainsi que des cornes 36.1-36.4 s'étendant de part et d'autre de la paroi verticale 35. L'élément intermédiaire 25 comporte ainsi deux cornes 36.1, 36.2 dirigées vers un réservoir de gaz 12 ainsi que deux cornes 36.3, 36.4 opposées dirigées dans une direction opposée vers un réservoir de gaz 12 adjacent. Les cornes 36.1-36.4 présentent une épaisseur qui diminue lorsque l'on se déplace de la paroi verticale 35 vers l'extrémité libre des cornes 36.1-36.4.

Une face interne 34.1, 34.2 coopérant avec une portion d'une face latérale cylindrique d'un réservoir de gaz 12 est formée par une face interne de la paroi verticale 35 et les deux faces internes de deux cornes associées 36.1 et 36.2 ou 36.3 et 36.4.

Les cornes 36.1-36.4 présentent une épaisseur qui diminue lorsque l'on se déplace de la paroi verticale 35 vers l'extrémité libre des cornes 36.1-36.4. L'élément intermédiaire 25 pourra comporter une rainure 37 ménagée dans une face supérieure et/ou dans une face inférieure pour le passage d'un longeron 16 du bac 13 de réception des réservoirs de gaz 12. L'élément intermédiaire 25 pourra également comporter au moins un orifice traversant 32 de passage de canalisation de gaz, notamment deux orifices traversants 32 ou plus de deux orifices 32.

Avantageusement, comme cela est illustré par la figure 9, le dispositif d'amortissement de choc 21, c'est-à-dire l'élément latéral 24 et/ou l'élément intermédiaire 25, est configuré de façon à convertir un effort F concentré d'un choc latéral en un champ de pression P uniforme appliqué par le dispositif d'amortissement de choc 21 sur la face latérale du réservoir 12.

A cet effet, comme on peut le voir sur les figures 8 et 11, l'élément latéral 24 ou l'élément intermédiaire 25 comporte un corps creux 39 dans lequel sont ménagées des nervures 40 formant une pluralité de cellules 41. On obtient ainsi une structure de type "nid d'abeilles". Avantageusement, au moins certaines cellules 41 pourront présenter chacune un axe X1 orienté radialement par rapport à un axe X2 du réservoir de gaz 12.

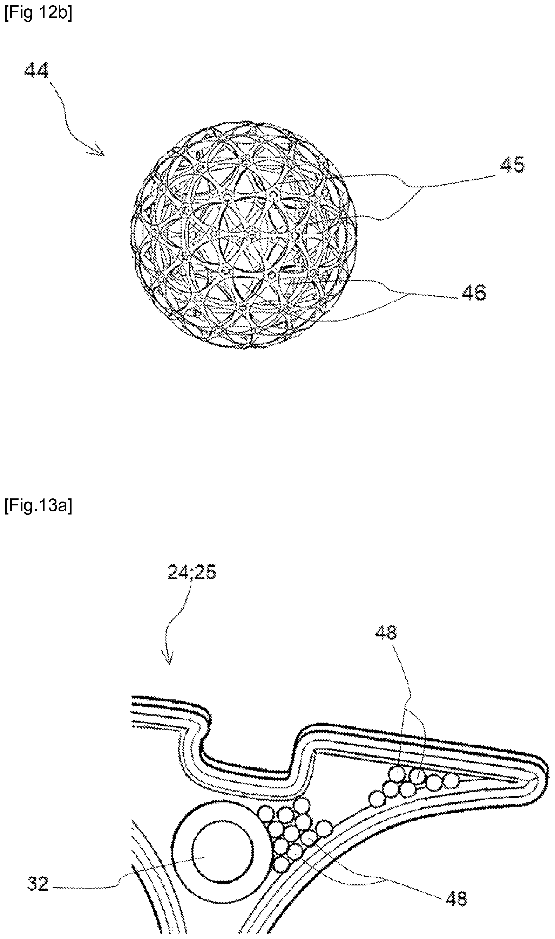

Alternativement, comme cela est illustré sur la figure 12a, l'élément latéral 24 et/ou l'élément intermédiaire 25 comporte un corps creux 39 dans lequel sont disposées une pluralité de sphères 44 ayant une structure lattice. Comme on peut le voir sur la figure 12b, de telles sphères 44 sont formées par une combinaison de zones pleines 45 et de zones de vide 46.

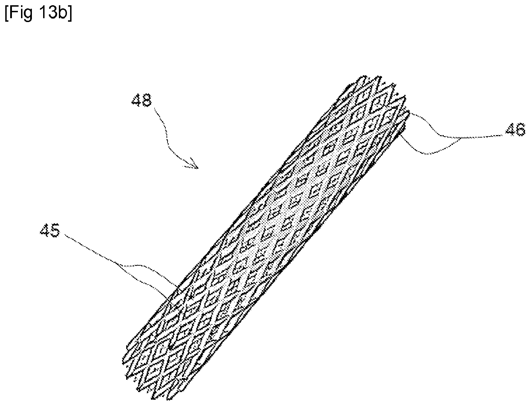

Alternativement, comme cela est illustré par la figure 13a, l'élément latéral et/ou l'élément intermédiaire 25 comporte un corps creux 39 dans lequel sont disposés une pluralité de cylindres 48 ayant une structure lattice. Comme on peut le voir sur la figure 13b, de tels cylindres 48 sont formés par une combinaison de zones pleines 45 et de zones de vide 46.

L'élément latéral 24 et/ou l'élément intermédiaire 25 pourront être réalisés dans un matériau plastique, tel qu'un polypropylène ou dans un matériau composite comportant des fibres enduites de résine, notamment thermodurcissable. L'élément latéral 24 et/ou l'élément intermédiaire 25 pourront être réalisés par moulage ou par impression 3D en particulier pour obtenir les structures lattices.

## Revendications

1. Véhicule (10), notamment un véhicule automobile, comportant:
- des réservoirs de gaz (12), tels que des réservoirs à hydrogène, et
- un bac (13) de réception des réservoirs de gaz (12) comportant un cadre (15) formé par des longerons (16) et des flasques latéraux (17), **caractérisé en ce que** ledit véhicule (10) comporte en outre un dispositif d'amortissement de choc (21) disposé au moins entre un flasque latéral (17) du bac (13) de réception des réservoirs de gaz (12) et au moins une portion d'une face latérale d'un réservoir de gaz (12) et/ou entre au moins deux portions de deux faces latérales de deux réservoirs de gaz (12) adjacents, de façon à pouvoir absorber par déformation au moins en partie un choc subi par le véhicule (10).

2. Véhicule selon la revendication 1, **caractérisé en ce que** le bac (13) de réception des réservoirs de gaz (12) comportant des traverses de renfort (19), le dispositif d'amortissement est situé dans une zone du bac (13) de réception des réservoirs de gaz (12) dépourvue de traverse de renfort (19).

3. Véhicule selon la revendication 1 ou 2, **caractérisé en ce que** le dispositif d'amortissement de choc (21) comporte au moins un élément latéral rapporté (24) disposé entre un flasque latéral (17) du bac (13) et au moins une portion d'une face latérale d'un réservoir de gaz (12) et au moins un élément intermédiaire rapporté (25) disposé entre au moins deux portions de deux faces latérales de deux réservoirs de gaz (12) adjacents, l'élément latéral rapporté (24) et l'élément intermédiaire rapporté (25) étant des éléments distincts l'un de l'autre.

4. Véhicule selon la revendication 3, **caractérisé en ce que** l'élément latéral rapporté (24) présente une face interne (27) en forme de portion de cylindre coopérant avec une portion d'une face latérale cylindrique d'un réservoir (12) et une face en appui contre au moins une portion d'un flasque latéral (17) du cadre (15) du bac (13) de réception des réservoirs de gaz (12).

5. Véhicule selon la revendication 3 ou 4, **caractérisé en ce que** l'élément intermédiaire rapporté (25) présente deux faces internes (34.1, 34.2) en forme de portion de cylindre coopérant chacune avec une portion d'une face latérale d'un réservoir de gaz (12) correspondant.

6. Véhicule selon l'une quelconque des revendications 3 à 5, **caractérisé en ce que** l'élément latéral rapporté (24) et/ou l'élément intermédiaire rapporté (25) comporte(nt) au moins un orifice (32) de passage de canalisation.

7. Véhicule selon l'une quelconque des revendications 1 à 6, **caractérisé en ce que** le dispositif d'amortissement de choc (21) comporte un corps creux (39) dans lequel sont ménagées des nervures (40) formant une pluralité de cellules creuses (41).

8. Véhicule selon l'une quelconque des revendications 1 à 6, **caractérisé en ce que** le dispositif d'amortissement de choc (21) comporte un corps creux (39) dans lequel sont disposées une pluralité de sphères (44) ayant une structure lattice.

9. Véhicule selon l'une quelconque des revendications 1 à 6, **caractérisé en ce que** le dispositif d'amortissement de choc (21) comporte un corps creux (39) dans lequel sont disposés une pluralité de cylindres (48) ayant une structure lattice.

## Patentansprüche

1. Fahrzeug (10), insbesondere Kraftfahrzeug, umfassend:
- Gastanks (12), wie beispielsweise Wasserstofftanks, und
- einen Tank (13) zur Aufnahme der Gastanks (12), der einen Rahmen (15) umfasst, der durch Seitenelemente (16) und Seitenplatten (17) gebildet wird, **dadurch gekennzeichnet, dass** das Fahrzeug (10) außerdem eine Vorrichtung zum Stoßdämpfer (21) umfasst ), angeordnet zumindest zwischen einem Seitenflansch (17) des Tanks (13) zur Aufnahme des Gastanks (12) und zumindest einem Teil einer Seitenfläche eines Gastanks (12 ) und/oder zwischen zumindest zwei Teilen des B. zwei Seitenflächen zweier benachbarter Gastanks (12), um einen Aufprall des Fahrzeugs (10) durch Deformation zumindest teilweise absorbieren zu können.

2. Fahrzeug nach Anspruch 1, **dadurch gekennzeichnet, dass** der Tank (13) zur Aufnahme der Gastanks (12) Verstärkungsquerträger (19) aufweist, wobei die Dämpfungsvorrichtung in einem Bereich des Tanks (13) zur Aufnahme der Gastanks (12) angeordnet ist. ohne Verstärkungssteg (19).

3. Fahrzeug nach Anspruch 1 oder 2, **dadurch gekennzeichnet, dass** die Stoßdämpfungsvorrichtung (21) mindestens ein befestigtes Seitenelement (24) umfasst, das zwischen einem Seitenflansch (17) des Tanks (13) und mindestens einem Teil einer Seite angeordnet ist. Fläche eines Gastanks (12) und mindestens ein hinzugefügtes Zwischenelement (25), das zwischen mindestens zwei Abschnitten von zwei Seitenflächen von zwei benachbarten Gastanks (12) angeordnet ist, wobei das hinzugefügte Seitenelement ( 24) und das gemeldete Zwischenelement ( 25) wobei es sich um voneinander verschiedene Elemente handelt.

4. Fahrzeug nach Anspruch 3, **dadurch gekennzeichnet, dass** das befestigte Seitenelement (24) eine Innenfläche (27) in Form eines Zylinderabschnitts aufweist, der mit einem Abschnitt einer zylindrischen Seitenfläche eines Tanks (12) zusammenwirkt, und eine Fläche und an zumindest einem Teil eines Seitenflansches (17) des Rahmens (15) des Tanks (13) zur Aufnahme der Gastanks (12) anliegt.

5. zylinderabschnittsförmige Innenflächen (34.1, 34.2) aufweist, die jeweils mit einem Abschnitt einer Seitenfläche eines Kraftstofftanks zusammenwirken. dem entsprechenden Gas (12).

6. Fahrzeug nach einem der Ansprüche 3 bis 5, **dadurch gekennzeichnet, dass** das seitliche Anbauelement (24) und/oder das Zwischenanbauelement (25) mindestens eine Öffnung (32) für die Durchführung einer Leitung aufweist.

7. Fahrzeug nach einem der Ansprüche 1 bis 6, **dadurch gekennzeichnet, dass** die Stoßdämpfungsvorrichtung (21) einen Hohlkörper (39) umfasst, in dem Rippen (40) ausgebildet sind, die eine Vielzahl von Hohlzellen (41) bilden.

8. Fahrzeug nach einem der Ansprüche 1 bis 6, **dadurch gekennzeichnet, dass** die Stoßdämpfungsvorrichtung (21) einen Hohlkörper (39) umfasst, in dem eine Vielzahl von Kugeln (44) mit einer Gitterstruktur angeordnet sind .

9. Fahrzeug nach einem der Ansprüche 1 bis 6, **dadurch gekennzeichnet, dass** die Stoßdämpfungsvorrichtung (21) einen Hohlkörper (39) umfasst, in dem mehrere Zylinder (48) mit einer Gitterstruktur angeordnet sind .

## Claims

1. Vehicle (10), in particular a motor vehicle, comprising:
- gas tanks (12), such as hydrogen tanks, and
- a tank (13) for receiving the gas tanks (12) comprising a frame (15) formed by side members (16) and side plates (17), **characterized in that** said vehicle (10) further comprises a shock absorbing device (21) arranged at least between a side plate (17) of the tank (13) for receiving the gas tanks (12) and at least one portion of a side face of a gas tank (12) and/or between at least two portions of two side faces of two adjacent gas tanks (12), so as to be able to absorb by deformation at least in part a shock suffered by the vehicle (10).

2. Vehicle according to claim 1, **characterized in that** the tank (13) for receiving the gas tanks (12) comprises reinforcing crosspieces (19), the damping device is located in an area of the tank (13) for receiving the gas tanks (12) without a reinforcing crosspiece (19).

3. Vehicle according to claim 1 or 2, **characterized in that** the shock absorbing device (21) comprises at least one added lateral element (24) arranged between a lateral flange (17) of the tank (13) and at least one portion of a lateral face of a gas tank (12) and at least one added intermediate element (25) arranged between at least two portions of two lateral faces of two adjacent gas tanks (12), the added lateral element (24) and the added intermediate element (25) being elements distinct from each other.

4. Vehicle according to claim 3, **characterized in that** the attached lateral element (24) has an internal face (27) in the form of a portion of a cylinder cooperating with a portion of a cylindrical lateral face of a tank (12) and a face bearing against at least a portion of a lateral flange (17) of the frame (15) of the tank (13) for receiving the gas tanks (12).

5. Vehicle according to claim 3 or 4, **characterized in that** the attached intermediate element (25) has two internal faces (34.1, 34.2) in the form of a portion of a cylinder, each cooperating with a portion of a lateral face of a corresponding gas tank (12).

6. Vehicle according to any one of claims 3 to 5, **characterized in that** the added lateral element (24) and/or the added intermediate element (25) comprises at least one orifice (32) for passage of a pipe.

7. Vehicle according to any one of claims 1 to 6, **characterized in that** the shock absorbing device (21) comprises a hollow body (39) in which ribs (40) are formed forming a plurality of hollow cells (41).

8. Vehicle according to any one of claims 1 to 6, **characterized in that** the shock absorbing device (21) comprises a hollow body (39) in which are arranged a plurality of spheres (44) having a lattice structure .

9. Vehicle according to any one of claims 1 to 6, **characterized in that** the shock absorbing device (21) comprises a hollow body (39) in which are arranged a plurality of cylinders (48) having a lattice structure .
